# EUROPÄISCHE PATENTSCHRIFT

(11) **EP 3 037 801 B1**
(45) Veröffentlichungstag und Bekanntmachung des Hinweises auf die Patenterteilung: **05.08.2020**
(21) Anmeldenummer: 15201403.1
(22) Anmeldetag: 18.12.2015
(51) Int. Cl.: G01M 17/04

(54) **VERFAHREN UND VORRICHTUNG ZUR ERMITTLUNG DER DYNAMISCHEN RADAUFSTANDSKRAFT**
METHOD AND DEVICE FOR THE DETERMINATION OF DYNAMIC WHEEL CONTACT FORCE
PROCEDE ET DISPOSITIF DE DETERMINATION DE LA FORCE D'APPUI DYNAMIQUE D'UNE ROUE

(30) Priorität: 22.12.2014 DE 102014119393
(43) Veröffentlichungstag der Anmeldung: 29.06.2016
(73) Patentinhaber: FSD Fahrzeugsystemdaten GmbH, 01307 Dresden (DE)
(72) Erfinder: Bönninger, Jürgen, 01326 Dresden (DE); Ussath, Robert, 01309 Dresden (DE); Eckelmann, Sven, 01157 Dresden (DE)
(74) Vertreter: Lippert Stachow Patentanwälte Rechtsanwälte Partnerschaft mbB

(56) Entgegenhaltungen:
- EP-A2- 2 136 195
- WO-A1-2007/059935
- DE-A1- 4 431 794
- DE-A1-102006 031 587
- DE-A1-102008 041 732

## Beschreibung

Die Erfindung betrifft ein Verfahren und eine Vorrichtung zur Ermittlung der dynamischen Radaufstandskräfte eines Fahrzeugs.

Aus DE 2 108 258 A1 ist eine Vorrichtung zur Prüfung von Schwingungsdämpfern an Fahrzeugen bekannt, bei der ein Rad des Fahrzeugs auf einer Messschwinge stehend von einem unterhalb und unabhängig von der Messschwinge angeordneten Antriebsmittel über die Resonanzfrequenz hinaus in Schwingungen versetzt wird und nach Abrücken des Antriebsmittels mittels der Messschwinge und des Messmittels Dämpfungsgrößen, Amplituden, Kräfte oder Energien des Schwingungsdämpfers ermittelt werden.

Aus DE 41 31 006 A1 ist ein Verfahren zur Prüfung der Fahrsicherheit eines Kraftfahrzeugs bekannt, bei dem durch Fußpunkterregung Schwingungen über ein auf einer Radaufstandsfläche aufstehendes Kraftfahrzeugrad in die Feder und Schwingungsdämpfer aufweisende Radaufhängung des Kraftfahrzeugrades eingeleitet werden und durch die Fußpunkterregung erzeugte Kräfte gemessen werden, indem die durch die Erregerschwingungen bewirkte dynamische Radlast, mit welcher der Reifen des Rades auf die Radaufstandsfläche drückt, und die statische Radlast gemessen werden und die gemessene dynamische Radlast mit einem von der statischen Radlast abhängigen Bezugswert in Bezug gesetzt wird. Zur Durchführung des Verfahrens wird eine Vorrichtung vorgeschlagen mit einer Radaufstandsfläche, auf welche eines der Räder des Kraftfahrzeugs für die Einleitung einer Erregerschwingung in die Feder und Schwingungsdämpfer aufweisende Radaufhängung aufstellbar ist, einem Schwingungsgenerator zum Erzeugen der Erregerschwingung, die auf die Radaufstandsfläche wirkt und einer Kraftmesseinrichtung zum Messen von durch die Erregerschwingung erzeugten Kräften, wobei die Erregerschwingung eine periodische Schwingung ist und die Kraftmesseinrichtung als Reaktionskraftmesseinrichtung auf der Seite des Schwingungsgenerators ausgebildet ist, welche die zwischen Radaufstandsfläche und Reifen des Rades wirkenden Kraftschwankungen misst.

Aus DE 100 17 558 A1 ist ein Gerät zur Überprüfung der Wirksamkeit von Schwingungsdämpfern an Fahrzeugen in eingebautem Zustand bekannt, dessen mittels eines Antriebs in etwa senkrecht schwingende Radauflage die Achsmasse zu Resonanzschwingungen anregt, deren Amplituden durch eine Messeinrichtung zur Anzeige gebracht werden, wobei zwischen der Radauflage und dem Antrieb ein elastisches Glied angeordnet ist und die Federrate des elastischen Gliedes im Verhältnis zur jeweiligen Radaufstandslast eines zu prüfenden Fahrzeuges angepasst wird.

Aus DE 102 00 514 A1 ist ein Kfz-Stoßdämpfer-Prüfstand mit einer Rad-Stützplatte bekannt, die an ein Parallel-Lenkergestänge angelenkt ist, dessen einer Hebel als Kragarm verlängert ist, und an einer Feder-Kontaktfläche des Kragarms mittels einer Schraubenfeder so abgestützt ist, dass sich die Längsmittelachse der Schraubenfeder stets selbsttätig senkrecht zu der Kontaktfläche ausrichtet.

Aus DE 10 2004 003 606 A1 ist eine Prüfvorrichtung zum Bestimmen der Achsdämpfung von Fahrzeugen. Eine Vorrichtung zum Bestimmen der Achsdämpfung von Fahrzeugen weist eine Basis und eine Aufstandsplatte für ein Fahrzeugrad auf, wobei die Aufstandsplatte über ein erstes elastisches Element mit einem Antrieb verbunden ist und über ein zweites elastisches Element mit der Basis verbunden ist. Der Antrieb versetzt die Aufstandsplatte über die Doppelschwinge in eine zur Vertikalen parallele Schwingung. Die Prüfvorrichtung weist ferner eine Messvorrichtung auf, die eine Bewegung der Aufstandsplatte erfasst.

Aus DE 44 31 794 A1 ist ein Verfahren zur Bestimmung der Eigenschaften der in einem Kraftfahrzeug eingebauten Stossdämpfer bekannt. In dem Prüfverfahren wird das Kraftfahrzeug auf eine Auffahrhalterung gebracht, die anschließend schnell entfernt wird, damit das Kraftfahrzeug auf eine Unterlage auffällt, deren Abstand von der Auffahrhalterung dem durch die Konstruktion des Kraftfahrzeuges vorgegebenen Restausfederungsweg entspricht, und der Verlauf der beim Auftreffen auf die Unterlage wirkenden sogenannten Radaufstandskraft bestimmt wird.

All diesen bekannten Verfahren und Vorrichtungen ist gemein, dass das Fahrzeug bei der Prüfung oder Messung stillsteht. Ein Rad des Fahrzeugs wird auf einer Radaufstandsplatte oder einer Radaufstandsrolle abgestützt, welche dann das Rad schwingungserregt. Wenn bei dieser Art von Mess- und Prüfständen überhaupt eine Messung der Radlast erfolgt, dann meist über die Lagerung der Radaufstandsplatte oder Radaufstandsrolle.

Demgegenüber ist aus DE 10 2012 200 194 A1 ein Schwingungsdämpfer-Prüfsystem für ein Kraftfahrzeug bekannt, umfassend wenigstens einen Messkopf zum optischen Erfassen der Positionen eines Rades und der Karosserie des Kraftfahrzeugs zu mehreren Erfassungszeitpunkten, eine Anregungseinrichtung zum Versetzen des Kraftfahrzeugs in eine vertikale Schwingung, insbesondere eine Schwelle zum Überfahren durch das Kraftfahrzeug und eine Datenverarbeitungseinheit, die eingerichtet ist, um Messdaten von dem Messkopf zu empfangen. Das Messsystem umfasst eine längliche Schwelle von definierter Höhe, deren Haupterstreckungsrichtung im Wesentlichen rechtwinklig zu der Bewegungsrichtung des Versuchsfahrzeugs angeordnet ist. Die Breite der Schwelle entspricht wenigstens der Breite des Versuchsfahrzeugs, sodass beim Überfahren der Schwelle in Bewegungsrichtung durch das Versuchsfahrzeug jeweils beide Räder der gleichen Achse durch die Schwelle eine definierte Anregung erfahren und dadurch in eine vertikale Schwingung versetzt werden. Seitlich neben der Schwelle, entweder auf Höhe der Schwelle oder kurz danach, sind ein linker Messkopf und ein rechter Messkopf angeordnet, die jeweils nach innen gerichtete Messkameras umfassen, die in geeigneter Höhe angebracht und in der Lage sind, die Position des Rads und der Karosserie des Kraftfahrzeugs, insbesondere bestimmter Merkmale auf dem Rad, und auf der Karosserie optisch zu erfassen.

Aus EP 2 136 195 A2 ist ein Verfahren zum Prüfen eines Schwingungsdämpfers eines Kraftfahrzeugs im eingebauten Zustand, sowie ein Schwingungsdämpfer-Prüfsystem für ein Kraftfahrzeug bekannt. Laut EP 2 136 195 A2 wird mit einem Versuchsfahrzeug ein Hindernis in Form einer Schwelle überfahren, wodurch beide Räder der gleichen Achse durch die Schwelle eine definierte Anregung erfahren und dadurch in eine vertikale Schwingung versetzt werden. Mit Hilfe von seitlich angebrachten und nach innen gerichteten Messkameras wird die Relativbewegung zwischen Kraftfahrzeugrad und Karosserie erfasst und anhand dem Schwingungsverlauf des Fahrzeuges kann der Schwingungsdämpfer überprüft werden.

Aus DE 10 2006 031587 A1 ist ein Verfahren und eine Vorrichtung zum Überwachen von Stoßdämpfern in Fahrzeugen bekannt, bei welcher während der Fahrt gesammelte Fahrzeugdaten ausgewertet werden, die eine Beurteilung des Fahrzeugverhaltens erlauben. Dem Verfahren und der Vorrichtung liegt die Erkenntnis zugrunde, dass sich in der Änderung der Verformung der Reifenseitenwand sowie in der Änderung des Reifendrucks während der Fahrt des Fahrzeuges, z.B. hervorgerufen durch Unebenheiten auf der Strasse, die Dämpfungscharakteristik des Stoßdämpfers widerspiegelt.

Aus WO 2007/059935 A1 ist eine Vorrichtung zur Erfassung der Profiltiefe und Art von Fahrzeugreifen sowie der Geschwindigkeit und der Bodenfreiheit an Fahrzeugen während der Fahrt bekannt. Bei dieser Profilmesseinrichtung ist eine Sensorreihe quer zur Fahrbahn sowie schräg zur Fahrtrichtung in die Fahrbahn eingelassen.

Aus DE 10 2008 041732 A1 ist eine Einrichtung und ein Verfahren zum Prüfen eines Fahrwerks und der dazugehörigen Stoßdämpfer bekannt. Bei dieser Fahrwerksprüfungseinrichtung kommen bildbasierte Korrelationssensoren zur dynamischen Messung der Karosserie- und Radbewegung während der Fahrwerks- und Stoßdämpferprüfung zum Einsatz.

Aus DE 10 2012 200 194 A1 sind ein Verfahren und eine Anordnung zur Baugruppenprüfung in Fahrzeugen bekannt, bei denen das Beschleunigungs-, Verzögerungs- oder Schwingverhalten nach einer Eigen- oder Fremderregung untersucht wird, um eine Baugruppenprüfung in Fahrzeugen genau und mit leicht handhabbaren Mitteln zu realisieren. Dies wird dadurch gelöst, dass das Fahrzeug oder Fahrzeugteile durch äußere mechanische Mittel erregt werden und durch ein mit dem Fahrzeug verbunden Adapter das dadurch bewirkte Beschleunigungs-, Verzögerungs- oder Schwingverhalten elektronisch erfasst wird und die Messergebnisse klassifiziert werden. Eine Schwingungsmessung erfolgt nach Anregung durch eine Fahrt über eine äußere physische Erregung in Form einer Schwelle, Rampe o. ä., die von dem Fahrzeug überfahren wird, durch Bewertung des Ausschwingverhaltens.

Die letztgenannten Dokumente, ausgenommen WO 2007/059935 A1 (keine Schwingungserregung) führen also die Schwingungserregung nicht stationär durch eine schwingende Radaufstandsplatte oder Radaufstandsrolle durch, sondern durch Überfahren eines Hindernisses. Es ist jedoch nicht möglich, Radlasten, d.h. Radaufstandskräfte zu ermitteln.

Eine Aufgabe der Erfindung besteht daher darin, ein Verfahren und eine Vorrichtung zur Ermittlung der Radaufstandskräfte eines Fahrzeugs mit geringem apparativem Aufwand in praxisnahen Situationen anzugeben.

Diese Aufgabe wird gelöst durch ein Verfahren mit den Merkmalen des Anspruchs 1 und mit einer Vorrichtung mit den Merkmalen des Anspruchs 9.

Das vorgeschlagene Verfahren zur Ermittlung der Radaufstandskräfte eines Fahrzeugs umfasst die Schritte
- Überfahren eines auf einem Untergrund angebrachten Hindernisses, das eine definierte Höhe oder/und eine definierte Breite oder/und eine definierte Querschnittsform aufweist, mit dem Fahrzeug in einer Fahrtrichtung,
- direktes Messen der auf den Untergrund wirkenden Radaufstandskraft mindestens eines Rades, wobei
- die Messung vor oder unmittelbar nach dem Überfahren des Hindernisses beginnt,
- die Messung über einen in der Fahrtrichtung erstreckten Streckenabschnitt erfolgt, der im Bereich des Hindernisses oder unmittelbar hinter dem Hindernis beginnt und eine endliche Länge hat, und
- in der Messung ermittelte Messdaten gesammelt oder/und angezeigt werden.

Diese einfachste Form des Messverfahrens ermöglicht zunächst die Ermittlung einer dynamischen Radaufstandskraft, die durch das Überfahren eines Hindernisses hervorgerufen wird. Das Hindernis ist bevorzugt standardisiert, d.h. es hat eine definierte Höhe oder/und eine definierte Breite oder/und eine definierte Querschnittsform. Als Hindernis in diesem Sinne bietet sich insbesondere eine quer zur Fahrtrichtung des Fahrzeugs angeordnete, beispielsweise im Querschnitt trapezförmige Schwelle an. Diese erzeugt an dem Rad oder den Rädern des Fahrzeugs, die das Hindernis überfahren, eine transiente Erregung, die eine bestimmte Amplitude der Kraftanregung erzeugt, die danach aufgrund der Federung und Dämpfung der Achse des Fahrzeugs abklingt. Die dynamische Radaufstandskraft schwingt um den Wert der statischen Achslast, der durch die Massenverteilung der Fahrzeuggesamtmasse bestimmt wird.

Dabei kann der Untergrund, auf dem das Fahrzeug bewegt wird, ein entsprechend zur Messung präparierter Fahrbahnbelag, beispielsweise ein Abschnitt einer Teststrecke oder der Fußboden einer Werkstatt sein. Alternativ kann der Untergrund eine Messplattform einer Vorrichtung sein, die zur Durchführung des Verfahrens ausgebildet ist, wie weiter unten noch näher erläutert wird.

In konkreter Ausgestaltung des Verfahrens kann vorgesehen sein, dass die Messung durch mindestens eine in den Untergrund eingelassene, lineare, in der Fahrtrichtung des Fahrzeugs erstreckte erste Sensoranordnung erfolgt. Diese Sensoranordnung erfasst die auf den Untergrund wirkende Radaufstandskraft auch über eine bestimmte Wegstrecke, auf der das betreffende Rad abrollt. Dadurch ist es möglich, den gesamten Ausschwingvorgang zu erfassen.

Insbesondere zur Untersuchung zweispuriger Fahrzeuge kann gemäß einer Ausgestaltung vorgesehen sein, dass die Messung für jede Fahrspur eines zweispurigen Fahrzeugs durch je eine in den Untergrund eingelassene, lineare, in der Fahrtrichtung des Fahrzeugs erstreckte erste Sensoranordnung erfolgt.

Obwohl die dynamische Radaufstandskraft aufgrund der transienten Erregung beim Überfahren des Hindernisses gleichzeitig die statische Radaufstandskraft beinhaltet, kann es dennoch sinnvoll sein, die statische Radaufstandskraft, d.h. die auf einen ebenen Untergrund ohne Überfahren eines Hindernisses wirkende Radaufstandskraft, separat zu ermitteln, beispielsweise um deren Wert mit dem aus der dynamischen Radlast abgeleiteten Wert der statischen Radlast zu verifizieren. Daher ist in einer Ausgestaltung des Verfahrens vorgesehen, dass bereits vor dem Überfahren des Hindernisses auf ebenem Untergrund ein direktes Messen der auf den Untergrund wirkenden Radaufstandskraft mindestens eines Rades erfolgt.

Dies kann beispielsweise dadurch erfolgen, dass die Messung durch eine in den Untergrund oberflächenbündig oder gegenüber der Oberfläche leicht erhöht eingelassene, lineare, quer zur Fahrtrichtung des Fahrzeugs erstreckte zweite Sensoranordnung erfolgt.

Anschließend können die in der Messung ermittelte Messdaten einer Datenerfassungseinrichtung zugeleitet werden, also beispielsweise einem speziell eingerichteten Computer oder einer spezialisierten Messeinrichtung, die zur Erfassung, Verarbeitung und Speicherung derartiger Messsignale geeignet und eingerichtet ist.

Weiterhin kann das Verfahren so ausgestaltet sein, dass die Messdaten in der Datenerfassungseinrichtung mit anderen, in derselben Messung erfassten Messdaten anderer physikalischer Größen des Fahrzeugs zusammengeführt werden. Dadurch lassen sich Korrelationen zwischen verschiedenen physikalischen Größen erkennen und entsprechende Schlussfolgerungen ableiten. Die anderen physikalischen Größen können beispielsweise Beschleunigungen der Achse oder des Fahrzeugaufbaus, Dehnungen an besonders beanspruchten Querschnitten des Fahrwerks, absolute und relative Wege und dergleichen mehr sein. Auf diese Weise können für verschiedene Fahrzeuge Erkenntnisse über Materialbeanspruchungen, über den Verschleiß einzelner Bauteile, über Parameter, die den Komfort für die Passagiere beeinflussen, usw. gewonnen werden, indem verschiedene Fahrzeuge jeweils dasselbe Hindernis überfahren und die jeweiligen Messergebnisse miteinander verglichen und Schlussfolgerungen gezogen werden.

In einer besonderen Ausgestaltung des Verfahrens kann vorgesehen sein, dass die Geschwindigkeit eines Fahrzeugs ermittelt wird, indem ein Abstand zweier in der Fahrtrichtung aufeinanderfolgender Sensoren der Sensoranordnung durch eine Zeitdifferenz zwischen zwei von je einem der beiden aufeinanderfolgenden Sensoren erzeugten Impulsen dividiert wird.

Alternativ oder zusätzlich kann das Verfahren so ausgestaltet sein, dass eine schräge Überfahrt eines Fahrzeugs erkannt wird, indem ein Abstand zweier in der Fahrtrichtung aufeinanderfolgender Sensoren der Sensoranordnung durch eine Zeitdifferenz zwischen zwei von je einem der beiden aufeinanderfolgenden Sensoren erzeugten Impulsen dividiert wird und die so rechnerisch ermittelte Geschwindigkeit mit einer bekannten Geschwindigkeit des Fahrzeugs verglichen wird.

Weiterhin kann bei dem vorgeschlagenen Verfahren alternativ oder zusätzlich zu den bisher beschriebenen Schritten vorgesehen sein, dass ein Achsabstand eines Fahrzeuges ermittelt wird, indem eine Zeitdifferenz zwischen zwei von demselben Sensor mindestens einer Sensoranordnung nacheinander erzeugte Impulse mit einer bekannten Geschwindigkeit eines Fahrzeugs multipliziert werden.

Ein weiterer Schritt des vorgeschlagenen Verfahrens kann darin bestehen, dass eine Spurweite eines Fahrzeugs ermittelt wird, indem den von je einem Sensor je einer ersten Sensoranordnung gleichzeitig erzeugten Impulsen ein Distanzwert zugeordnet wird, der sich aus einem bekannten Abstand der beiden ersten Sensoranordnungen zueinander ergibt.

Außerdem kann das Verfahren alternativ oder zusätzlich so ausgestaltet sein, dass eine Reifenschädigung im Bereich einer Lauffläche eines Reifens eines Fahrzeugs ermittelt wird, indem von in der Fahrtrichtung gesehen hintereinander angeordneten Sensoren einer Sensoranordnung erzeugte Impulse miteinander verglichen werden.

Zur Durchführung des oben beschriebenen Verfahrens wird eine Vorrichtung zur Ermittlung der Radaufstandskräfte eines Fahrzeugs vorgeschlagen, die eine von einem Fahrzeug befahrbare Messplattform sowie ein an der Messplattform anbringbares, von einem Fahrzeug überfahrbares Hindernis umfasst, wobei in die Messplattform zumindest im Bereich einer Fahrspur des Fahrzeugs mindestens eine lineare, in der Fahrtrichtung des Fahrzeugs erstreckte erste Sensoranordnung integriert ist.

Die erste Sensoranordnung kann dabei so angeordnet sein, dass die Messung unmittelbar hinter dem Hindernis beginnt. Alternativ kann die erste Sensoranordnung aber auch so angeordnet sein, dass bereits das Hindernis selbst zur Messstrecke gehört, beispielsweise indem ein Teil der Sensoren der ersten Sensoranordnung in das Hindernis integriert ist oder das Hindernis auf der ersten Sensoranordnung angebracht wird, so dass das Hindernis die Radaufstandskraft des darüberfahrenden Fahrzeugs auf die darunter angeordneten Sensoren überträgt. Die erste Sensoranordnung kann beispielsweise oberflächenbündig oder gegenüber der Oberfläche leicht erhöht angeordnet sein.

Der Begriff "Messplattform" soll dabei in keiner Weise einschränkend verstanden werden. Eine Messplattform in diesem Sinne kann beispielsweise eine ebene Platte sein, an der mindestens ein Hindernis anbringbar ist, und in die eine Sensoranordnung in der beschriebenen Art eingebracht ist. Eine solche Messplattform kann, im Zusammenwirken mit dem Hindernis und der Sensoranordnung, einen transportablen Prüfstand darstellen, der bedarfsweise aufgestellt werden kann.

Alternativ kann die Vorrichtung auch dadurch gebildet sein, dass das Hindernis auf einer Fahrbahn angebracht ist und die Sensoranordnung in einem Fahrbahnbelag angeordnet ist. In diesem Fall stellt die Vorrichtung einen stationären Prüfstand dar, der nicht ohne weiteres an einen anderen Ort bewegt werden kann.

Eine Sensoranordnung im obigen Sinn kann beispielsweise eine lineare Anordnung piezoelektrischer Kraftsensoren sein, die beispielsweise von Kistler unter der Bezeichnung Lineas angeboten wird. Diese Sensoranordnungen können in eine Nut einer Fahrbahn oder ähnlichen Oberfläche eingebracht und mit einer Vergussmasse fixiert werden. Die Messwerte werden mittels Kabeln ebenfalls unterirdisch zu einer entsprechenden Messeinrichtung weitergeleitet.

Weiter kann die Vorrichtung so ausgestaltet sein, dass an der Messplattform verschiedene Hindernisse an derselben Stelle anbringbar sind oder/und Hindernisse an verschiedenen Stellen anbringbar sind. Das Hindernis oder die Hindernisse können dabei lösbar anbringbar sein, so dass verschiedene definierte Hindernisse gegeneinander ausgetauscht werden können. Dies ist sowohl bei einer Vorrichtung mit einer transportablen Messplattform, als auch bei einer Vorrichtung, die in einen Fahrbahnbelag eingebracht ist, möglich.

Weiterhin kann vorgesehen sein, dass zwei oder mehr in der Fahrtrichtung des Fahrzeugs erstreckte erste Sensoranordnungen parallel und unmittelbar nebeneinander angeordnet sind. Dadurch wird einerseits sichergestellt, dass das Rad in jedem Fall über die Sensoranordnung fährt. Andererseits wird es dadurch möglich, die Messergebnisse der parallel zueinander angeordneten Sensoranordnungen miteinander zu vergleichen, um Messfehler auszuschließen oder zu korrigieren.

In weiterer Ausgestaltung der Vorrichtung ist vorgesehen, dass mindestens zwei erste Sensoranordnungen parallel und mit einem Abstand zueinander angeordnet sind, der einer Spurweite eines Fahrzeugs entspricht. Diese Ausgestaltung ermöglicht es, die beschriebenen Messungen für zweispurige Fahrzeuge für beide Fahrspuren gleichzeitig durchzuführen. Um die Vorrichtung leicht an verschiedene zu messende Fahrzeuge anpassen zu können, empfiehlt es sich, dass der Abstand der ersten Sensoranordnungen zueinander auf verschiedene Spurweiten einstellbar ist, beispielsweise indem mindestens eine der beiden ersten Sensoranordnungen jeder Fahrspur relativ zu der anderen ersten Sensoreinrichtung quer zur Fahrtrichtung bewegbar, beispielsweise verschiebbar, und vorteilhaft in einer beliebigen Position arretierbar, d.h. feststellbar ist.

Um bereits vor dem Überfahren des Hindernisses die statische Radaufstandskraft ermitteln zu können, kann die Vorrichtung weiterhin so ausgestaltet sein, dass zusätzlich vor dem Hindernis zumindest im Bereich einer Fahrspur des Fahrzeugs mindestens eine zweite lineare, quer zur Fahrtrichtung des Fahrzeugs erstreckte Sensoranordnung integriert ist.

Die zweite Sensoranordnung kann dabei vom gleichen Typ sein wie die hinter dem Hindernis angeordnete erste Sensoranordnung. Sie kann analog zur ersten Sensoranordnung oberflächenbündig oder gegenüber der Oberfläche leicht erhöht integriert sein. Da diese Messung auf ebener Strecke erfolgt, ist beim Überfahren der zweiten Sensoranordnung eine sehr genaue Ermittlung der statischen Radaufstandskraft möglich.

Um die Messgenauigkeit zu erhöhen sowie eventuelle Messfehler zu identifizieren und gegebenenfalls zu korrigieren kann weiter vorgesehen sein, dass im Bereich ein und derselben Fahrspur des Fahrzeugs mindestens zwei zweite Sensoranordnungen mit einem Abstand zueinander angeordnet sind.

Schließlich kann bei der Vorrichtung vorgesehen sein, dass im Bereich je einer Fahrspur des Fahrzeugs mindestens je eine zweite Sensoranordnung angeordnet ist, so dass die Ermittlung der statischen Radlasten der Räder beider Spuren eines zweispurigen Fahrzeugs gleichzeitig möglich ist.

Zur Messwerterfassung sowie zur Messwertverarbeitung kann die vorgeschlagene Vorrichtung darüber hinaus eine programmierbare Datenerfassungseinrichtung aufweisen, die zur Durchführung einer oder mehrerer der oben beschriebenen Verfahrensvarianten programmiert ist. Beispielsweise kann es sich dabei um einen PC, Laptop oder dergleichen mit einer Datenerfassungskarte handeln, auf dem eine Software zur Messwerterfassung und Messwertverarbeitung installiert ist.

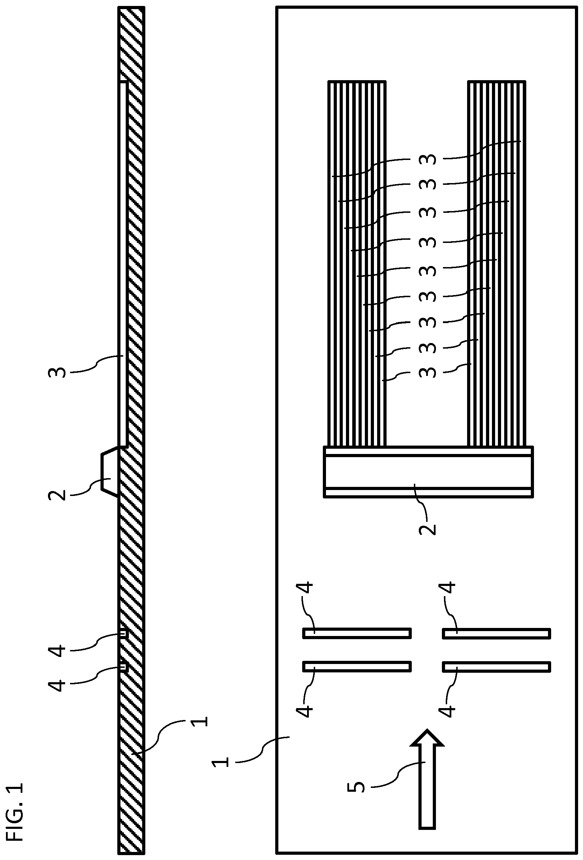

Nachfolgend wird die Erfindung anhand eines Ausführungsbeispiels und einer zugehörigen Zeichnung näher erläutert. Darin zeigt
Fig. 1 eine Draufsicht auf eine erfindungsgemäße Vorrichtung.

Auf einer Messplattform 1 ist ein Hindernis 2 in Form einer Schwelle angeordnet, das quer zu einer Fahrtrichtung 5 eines Fahrzeugs angeordnet ist.

In der Fahrtrichtung 5 hinter dem Hindernis 2 ist im Bereich jeder der beiden Fahrspuren eines zweispurigen Fahrzeugs je eine Gruppe paralleler, in der Fahrtrichtung 5 ausgerichteter erster Sensoranordnungen 3 angeordnet. Jede der beiden Gruppen erster Sensoranordnungen 3 umfasst im dargestellten Ausführungsbeispiel neun lineare Sensoranordnungen, die jeweils mehrere piezoelektrische Elemente umfasst, wobei dies lediglich eine beispielhafte Anzahl erster Sensoranordnungen 3 ist und die Anzahl auch größer oder kleiner sein kann. Die ersten Sensoranordnungen 3 haben in der Fahrtrichtung 5 eine Ausdehnung, die lang genug ist, um das Ausschwingverhalten zu erfassen, gleichzeitig aber kurz genug, dass nicht die Räder der Vorderachse und der Hinterachse des Fahrzeugs gleichzeitig auf die ersten Sensoranordnungen 3 einwirken. Beispielsweise sind die ersten Sensoranordnungen 3 jeweils ca. 1,50 m lang.

Insbesondere für den Fall, dass die Messsignale der Sensoren einer ersten Sensoranordnung 3 nicht separat auswertbar sind, ist es bedeutsam, dass die ersten Sensoranordnungen 3 jeweils kürzer sind als der Radstand des Fahrzeugs. Werden hingegen erste Sensoranordnungen 3 verwendet, bei denen die Messsignale einzelner Sensoren separat auswertbar sind, kann jede verwendete erste Sensoranordnung 3 auch länger sein als der Radstand des Fahrzeugs. In diesem Fall ist es unschädlich, wenn eine erste Sensoranordnung 3 länger ist als der Radstand des Fahrzeugs, weil das Messsignal jedes Sensors eindeutig entweder der Einwirkung eines Rades der Vorderachse oder der Hinterachse zugeordnet werden kann. In diesem Fall ist es auch möglich, die Messsignale der einzelnen Sensoren unmittelbar nebeneinander angeordneter erster Sensoranordnungen 3 beispielsweise hinsichtlich der Latschbreite oder des Profils des Reifens auszuwerten.

In der Fahrtrichtung 5 vor dem Hindernis 2 ist im Bereich jeder der beiden Fahrspuren eines zweispurigen Fahrzeugs je eine Gruppe paralleler, quer zur Fahrtrichtung 5 ausgerichteter zweiter Sensoranordnungen 4 angeordnet. Jede der beiden Gruppen zweiter Sensoranordnungen 4 umfasst zwei lineare Sensoranordnungen, die jeweils mehrere piezoelektrische Elemente umfasst.

### Bezugszeichenliste

- 1: Messplattform
- 2: Hindernis
- 3: erste Sensoranordnung
- 4: zweite Sensoranordnung
- 5: Fahrtrichtung

## Patentansprüche

1. Verfahren zur Ermittlung der dynamischen Radaufstandskraft eines Fahrzeugs, umfassend die Schritte
• Überfahren eines auf einem Untergrund angebrachten Hindernisses, das eine definierte Höhe oder/und eine definierte Breite oder/und eine definierte Querschnittsform aufweist, mit dem Fahrzeug in einer Fahrtrichtung,
• direktes Messen der auf den Untergrund wirkenden Radaufstandskraft mindestens eines Rades, wobei
• die Messung vor oder unmittelbar nach dem Überfahren des Hindernisses beginnt,
• die Messung über einen in der Fahrtrichtung erstreckten Streckenabschnitt erfolgt, der im Bereich des Hindernisses oder unmittelbar hinter dem Hindernis beginnt und eine endliche Länge hat, und
• in der Messung ermittelte Messdaten gesammelt oder/und angezeigt werden.

2. Verfahren nach Anspruch 1, **dadurch gekennzeichnet, dass** die Messung durch mindestens eine in den Untergrund eingelassene, lineare, in der Fahrtrichtung des Fahrzeugs erstreckte erste Sensoranordnung erfolgt.

3. Verfahren nach Anspruch 1 oder 2, **dadurch gekennzeichnet, dass** die Messung für jede Fahrspur eines zweispurigen Fahrzeugs durch je eine in den Untergrund eingelassene, lineare, in der Fahrtrichtung des Fahrzeugs erstreckte erste Sensoranordnung erfolgt.

4. Verfahren nach einem der Ansprüche 1 bis 3, **dadurch gekennzeichnet, dass** bereits vor dem Überfahren des Hindernisses auf ebenem Untergrund ein direktes Messen der auf den Untergrund wirkenden Radaufstandskraft mindestens eines Rades erfolgt.

5. Verfahren nach Anspruch 4, **dadurch gekennzeichnet, dass** die Messung durch mindestens eine in den Untergrund eingelassene, lineare, quer zur Fahrtrichtung des Fahrzeugs erstreckte zweite Sensoranordnung erfolgt.

6. Verfahren nach einem der Ansprüche 1 bis 5, **dadurch gekennzeichnet, dass** in der Messung ermittelte Messdaten einer Datenerfassungseinrichtung zugeleitet werden.

7. Verfahren nach Anspruch 6, **dadurch gekennzeichnet, dass** die Messdaten in der Datenerfassungseinrichtung mit anderen, in derselben Messung erfassten Messdaten anderer physikalischer Größen des Fahrzeugs zusammengeführt werden.

8. Verfahren nach einem der Ansprüche 2 bis 7, **dadurch gekennzeichnet, dass** die Geschwindigkeit eines Fahrzeugs ermittelt wird, indem ein Abstand zweier in der Fahrtrichtung aufeinanderfolgender Sensoren mindestens einer Sensoranordnung durch eine Zeitdifferenz zwischen zwei von je einem der beiden aufeinanderfolgenden Sensoren erzeugten Impulsen dividiert wird, oder/und dass eine schräge Überfahrt eines Fahrzeugs erkannt wird, indem ein Abstand zweier in der Fahrtrichtung aufeinanderfolgender Sensoren der Sensoranordnung durch eine Zeitdifferenz zwischen zwei von je einem der beiden aufeinanderfolgenden Sensoren erzeugten Impulsen dividiert wird und die so rechnerisch ermittelte Geschwindigkeit mit einer bekannten Geschwindigkeit des Fahrzeugs verglichen wird, oder/und dass ein Achsabstand eines Fahrzeuges ermittelt wird, indem eine Zeitdifferenz zwischen zwei von demselben Sensor mindestens einer Sensoranordnung nacheinander erzeugte Impulse mit einer bekannten Geschwindigkeit eines Fahrzeugs multipliziert werden, oder/und dass eine Spurweite eines Fahrzeugs ermittelt wird, indem von den Sensoren je einer ersten Sensoranordnung gleichzeitig erzeugten Impulsen ein Distanzwert zugeordnet wird, der sich aus einem bekannten Abstand der beiden ersten Sensoranordnungen zueinander ergibt, oder/und dass eine Reifenschädigung im Bereich einer Lauffläche eines Reifens eines Fahrzeugs ermittelt wird, indem von in der Fahrtrichtung gesehen hintereinander angeordneten Sensoren einer Sensoranordnung erzeugte Impulse miteinander verglichen werden.

9. Vorrichtung zur Ermittlung der dynamischen Radaufstandskraft eines Fahrzeugs, umfassend eine von einem Fahrzeug befahrbare Messplattform (1) sowie ein an der Messplattform (1) angeordnetes, von einem Fahrzeug überfahrbares Hindernis (2), das eine definierte Höhe oder/und eine definierte Breite oder/und eine definierte Querschnittsform aufweist, wobei in die Messplattform (1) zumindest im Bereich einer Fahrspur des Fahrzeugs mindestens eine lineare, in der Fahrtrichtung (5) des Fahrzeugs erstreckte erste Sensoranordnung (3) integriert ist.

10. Vorrichtung nach Anspruch 9, **dadurch gekennzeichnet, dass** an der Messplattform (1) verschiedene Hindernisse (2) anbringbar sind.

11. Vorrichtung nach Anspruch 9 oder 10, **dadurch gekennzeichnet, dass** zwei oder mehr in der Fahrtrichtung (5) des Fahrzeugs erstreckte erste Sensoranordnungen (3) parallel und unmittelbar nebeneinander angeordnet sind.

12. Vorrichtung nach einem der Ansprüche 9 bis 11, **dadurch gekennzeichnet, dass** mindestens zwei erste Sensoranordnungen (3) parallel und mit einem Abstand zueinander angeordnet sind, der einer Spurweite eines Fahrzeugs entspricht.

13. Vorrichtung nach Anspruch 12, **dadurch gekennzeichnet, dass** der Abstand der ersten Sensoranordnungen (3) zueinander auf verschiedene Spurweiten einstellbar ist.

14. Vorrichtung nach einem der Ansprüche 9 bis 13, **dadurch gekennzeichnet, dass** zusätzlich vor dem Hindernis (2) zumindest im Bereich einer Fahrspur des Fahrzeugs mindestens eine zweite lineare, quer zur Fahrtrichtung (5) des Fahrzeugs erstreckte Sensoranordnung (4) integriert ist.

15. Vorrichtung nach Anspruch 14, **dadurch gekennzeichnet, dass** im Bereich ein und derselben Fahrspur des Fahrzeugs mindestens zwei zweite Sensoranordnungen (4) mit einem Abstand zueinander angeordnet sind.

16. Vorrichtung nach Anspruch 14 oder 15, **dadurch gekennzeichnet, dass** im Bereich je einer Fahrspur des Fahrzeugs mindestens je eine zweite Sensoranordnung (4) angeordnet ist.

17. Vorrichtung nach einem der Ansprüche 9 bis 16, **dadurch gekennzeichnet, dass** sie eine programmierbare Datenerfassungseinrichtung aufweist, die zur Durchführung des Verfahrens nach einem der Ansprüche 1 bis 8 programmiert ist.

## Claims

1. Method for determining the dynamic wheel contact force of a vehicle, comprising the steps
• traveling over an obstacle which is on an underlying surface which has a defined height and/or a defined width and/or a defined cross-sectional shape, with the vehicle in a direction of travel,
• directly measuring the wheel contact force, acting on the underlying surface, of at least one wheel, wherein
• the measurement starts before or directly after the obstacle has been travelled over,
• the measurement is carried out over a route section which extends in the direction of travel, starts in the region of the obstacle or directly after the obstacle and has a finite length, and
• measurement data which are determined in the measurement are collected and/or displayed.

2. Method according to Claim 1, **characterized in that** the measurement is carried out by at least one linear first sensor arrangement which is let into the underlying surface and extends in the direction of travel of the vehicle.

3. Method according to Claim 1 or 2, **characterized in that** the measurement is carried out for each lane of a two-lane vehicle, by means of in each case one linear first sensor arrangement which is let into the underlying surface and extends in the direction of travel of the vehicle.

4. Method according to one of Claims 1 to 3, **characterized in that** on a level underlying surface the wheel contact force, which acts on the underlying surface, of at least one wheel is already directly measured before the obstacle is travelled over.

5. Method according to Claim 4, **characterized in that** the measurement is carried out by means of at least one linear, second sensor arrangement which is let into the underlying surface and extends transversely with respect to the direction of travel of the vehicle.

6. Method according to one of Claims 1 to 5, **characterized in that** measurement data which are determined in the measurement are fed to a data collection apparatus.

7. Method according to Claim 6, **characterized in that** the measurement data are combined in the data collection apparatus with other measurement data which are collected in the same measurement and are from other physical variables of the vehicle.

8. Method according to one of Claims 2 to 7, **characterized in that** the speed of a vehicle is determined by dividing a distance between two sensors, which follow one another in the direction of travel, of at least one sensor arrangement by a time difference between two pulses which are generated by in each case one of the two sensors which follow one another, and/or **in that** oblique travel of a vehicle over the obstacle is detected by dividing a distance between two sensors, which follow one another in the direction of travel, of the sensor arrangement by a time difference between two pulses which are generated by in each case one of the two sensors which follow one another, and the speed which is determined by computation in this way is compared with a known speed of the vehicle, and/or **in that** a wheelbase of a vehicle is determined by multiplying a time difference between two pulses, generated in succession by the same sensor of at least one sensor arrangement, by a known speed of a vehicle, and/or **in that** a track width of a vehicle is determined by assigning a distance value to pulses which are generated simultaneously by the sensors of one respective first sensor arrangement, which distance value is obtained from a known distance of the two first sensor arrangements with respect to one another, and/or **in that** tyre damage in the region of the tread of a tyre of a vehicle is determined by comparing with one another pulses generated by sensors of a sensor arrangement which are arranged one behind the other in the direction of travel.

9. Device for determining the dynamic wheel contact force of a vehicle, comprising a measuring platform (1) which can be travelled on by a vehicle, and an obstacle (2) which is arranged on the measuring platform (1), can be travelled over by a vehicle and has a defined height and/or a defined width and/or a defined cross-sectional shape, wherein at least one linear first sensor arrangement (3) which extends in the direction of travel (5) of the vehicle is integrated into the measuring platform (1), at least in the region of a lane of the vehicle.

10. Device according to Claim 9, **characterized in that** different obstacles (2) can be positioned on the measuring platform (1).

11. Device according to Claim 9 or 10, **characterized in that** two or more first sensor arrangements (3) which extend in the direction of travel (5) of the vehicle are arranged in parallel and directly one next to the other.

12. Device according to one of Claims 9 to 11, **characterized in that** at least two first sensor arrangements (3) are arranged in parallel and at a distance from one another which corresponds to a track width of a vehicle.

13. Device according to Claim 12, **characterized in that** the distance between the first sensor arrangements (3) can be set to different track widths.

14. Device according to one of Claims 9 to 13, **characterized in that** in addition at least one second linear sensor arrangement (4) which extends transversely with respect to the direction of travel (5) of the vehicle is integrated before the obstacle (2), at least in the region of a lane of the vehicle.

15. Device according to Claim 14, **characterized in that** at least two second sensor arrangements (4) are arranged at a distance from one another in the region of the same lane of the vehicle.

16. Device according to Claim 14 or 15, **characterized in that** at least one second sensor arrangement (4) is arranged in each case in the region of one respective lane of the vehicle.

17. Device according to one of Claims 9 to 16, **characterized in that** said device has a programmable data collection apparatus which is programmed to carry out the method according to one of Claims 1 to 8.

## Revendications

1. Procédé de détermination de la force d'appui de roue dynamique d'un véhicule, comprenant les étapes consistant à
• franchir avec le véhicule dans un sens de la marche un obstacle placé sur un sol et qui présente une hauteur définie ou/et une largeur définie ou/et une forme de section transversale définie,
• mesurer directement la force d'appui de roue agissant sur le sol, dans lequel
• la mesure commence avant ou immédiatement après le franchissement de l'obstacle,
• la mesure est effectuée sur un tronçon s'étendant dans le sens de la marche, qui commence au niveau de l'obstacle ou immédiatement après l'obstacle et présente une longueur finie, et
• des données de mesure déterminées lors de la mesure sont collectées ou/et affichées.

2. Procédé selon la revendication 1, **caractérisé en ce que** la mesure est effectuée par au moins un premier ensemble de capteurs linéaire, encastré dans le sol et s'étendant dans le sens de la marche du véhicule.

3. Procédé selon la revendication 1 ou 2, **caractérisé en ce que** la mesure est effectuée pour chaque voie d'un véhicule à deux voies par respectivement un premier ensemble de capteurs linéaire, encastré dans le sol et s'étendant dans le sens de la marche du véhicule.

4. Procédé selon l'une quelconque des revendications 1 à 3, **caractérisé en ce qu'**une mesure directe de la force d'appui de roue agissant sur le sol d'au moins une roue est effectuée sur un sol plat avant même le franchissement de l'obstacle.

5. Procédé selon la revendication 4, **caractérisé en ce que** la mesure est effectuée par au moins un deuxième ensemble de capteurs linéaire, encastré dans le sol et s'étendant transversalement au sens de la marche du véhicule.

6. Procédé selon l'une quelconque des revendications 1 à 5, **caractérisé en ce que** les données de mesure déterminées lors de la mesure sont transmises à un dispositif d'acquisition de données.

7. Procédé selon la revendication 6, **caractérisé en ce que** les données de mesure sont regroupées dans le dispositif d'acquisition de données avec d'autres données de mesure acquises lors de la même mesure pour d'autres grandeurs physiques du véhicule.

8. Procédé selon l'une quelconque des revendications 2 à 7, **caractérisé en ce que** la vitesse d'un véhicule est déterminée **en ce qu'**une distance de deux capteurs consécutifs dans le sens de la marche d'au moins un ensemble de capteurs est divisée par une différence de temps entre deux impulsions générées par respectivement l'un des deux capteurs consécutifs, ou/et **en ce qu'**un passage en oblique d'un véhicule est reconnu **en ce qu'**une distance de deux capteurs de l'ensemble de capteurs, consécutifs dans le sens de la marche, est divisée par une différence de temps entre deux impulsions générées par respectivement l'un des deux capteurs consécutifs, et la vitesse ainsi déterminée mathématiquement est comparée à une vitesse connue du véhicule, ou/et **en ce qu'**un empattement d'un véhicule est déterminé **en ce qu'**une différence de temps entre deux impulsions générées par le même capteur d'au moins un ensemble de capteurs est multipliée par une vitesse connue d'un véhicule, ou/et **en ce qu'**un écartement des roues d'un véhicule est déterminé **en ce qu'**une valeur de distance est attribuée aux impulsions générées en même temps par les capteurs respectivement d'un premier ensemble de capteurs, ladite valeur résultant d'une distance connue des deux premiers ensembles de capteurs l'un par rapport à l'autre, ou/et **en ce qu'**un dégât de pneu est déterminé au niveau d'une bande de roulement d'un pneu d'un véhicule **en ce que** des impulsions générées par des capteurs d'un ensemble de capteurs, disposés les uns après les autres, vus dans le sens de la marche, sont comparées les unes aux autres.

9. Dispositif de détermination de la force d'appui de roue dynamique d'un véhicule, comprenant une plate-forme de mesure (1) accessible par un véhicule, ainsi qu'un obstacle (2) pouvant être franchi par un véhicule, disposé sur la plate-forme de mesure (1) et qui présente une hauteur définie ou/et une largeur définie ou/et une forme de section transversale définie, dans lequel au moins un premier ensemble de capteurs (3) linéaire, s'étendant dans le sens de la marche (5) du véhicule, est intégré dans la plate-forme de mesure (1), au moins au niveau d'une voie du véhicule.

10. Dispositif selon la revendication 9, **caractérisé en ce que** différents obstacles (2) peuvent être placés sur la plate-forme de mesure (1).

11. Dispositif selon la revendication 9 ou 10, **caractérisé en ce que** deux ou plus de deux premiers ensembles de capteurs (3), s'étendant dans le sens de la marche (5) du véhicule, sont disposés en parallèle et de manière immédiatement adjacente.

12. Dispositif selon l'une quelconque des revendications 9 à 11, **caractérisé en ce qu'**au moins deux premiers ensembles de capteurs (3) sont disposés en parallèle et à une certaine distance l'un par rapport à l'autre qui correspond à un écartement des roues d'un véhicule.

13. Dispositif selon la revendication 12, **caractérisé en ce que** les distances des premiers ensembles de capteurs (3) sont réglables l'une par rapport à l'autre sur des écartements de roue différents.

14. Dispositif selon l'une quelconque des revendications 9 à 13, **caractérisé en ce qu'**en plus, avant l'obstacle (2), au moins au niveau d'une voie du véhicule, au moins un deuxième ensemble de capteurs (4) linéaire, s'étendant transversalement au sens de la marche (5) du véhicule, est intégré.

15. Dispositif selon la revendication 14, **caractérisé en ce qu'**au niveau d'une seule et même voie du véhicule, au moins deux deuxièmes ensembles de capteurs (4) sont disposés avec une distance l'un par rapport à l'autre.

16. Dispositif selon la revendication 14 ou 15, **caractérisé en ce qu'**au niveau respectivement d'une voie du véhicule, respectivement au moins un deuxième ensemble de capteurs (4) est disposé.

17. Dispositif selon l'une quelconque des revendications 9 à 16, **caractérisé en ce qu'**il présente un dispositif d'acquisition de données programmable qui est programmé pour exécuter le procédé selon l'une quelconque des revendications 1 à 8.
